# EUROPÄISCHE PATENTSCHRIFT

(11) **EP 3 303 884 B1**
(45) Veröffentlichungstag und Bekanntmachung des Hinweises auf die Patenterteilung: **29.01.2020**
(21) Anmeldenummer: 16736367.0
(22) Anmeldetag: 25.05.2016
(51) Int. Cl.: F16J 3/04, F16D 3/84, F16J 15/52

(54) **GEHÄUSEKAPPE FÜR EIN GELENK SOWIE ANORDNUNG AUS EINEM GELENK UND EINER WELLE**
HOUSING CAP FOR A JOINT, AND ASSEMBLY COMPOSED OF A JOINT AND A SHAFT
CHAPEAU DE BOÎTIER POUR UNE ARTICULATION AINSI QU'ENSEMBLE COMPOSÉ D'UNE ARTICULATION ET D'UN ARBRE

(30) Priorität: 05.06.2015 DE 102015007451
(43) Veröffentlichungstag der Anmeldung: 11.04.2018
(73) Patentinhaber: Neumayer Tekfor Engineering GmbH, 77756 Hausach (DE)
(72) Erfinder: ETZOLD, Thomas, 77652 Offenburg (DE)
(86) Internationale Anmeldenummer: PCT/DE2016/000223
(87) Internationale Veröffentlichungsnummer: WO 2016/192701

(56) Entgegenhaltungen:
- GB-A- 2 259 349

## Beschreibung

Die Erfindung betrifft eine Gehäusekappe für ein Gelenk, mit einem Faltenbalgabschnitt und mit einem Gelenkabschnitt. Weiterhin bezieht sich die Erfindung auf eine Anordnung aus einem Gelenk und einer Welle, mit einer Gehäusekappe und einem Faltenbalg, wobei die Gehäusekappe einen Faltenbalgabschnitt und einen Gelenkabschnitt aufweist und wobei die Gehäusekappe eine Außennabe des Gelenks und den Faltenbalg umfasst, wobei der Faltenbalg zwischen dem Gelenk und der mit dem Gelenk verbundenen Welle angeordnet ist.

Gehäusekappen finden insbesondere in der Automobilindustrie Anwendung und dienen zum Schutz von Gelenken, die insbesondere im Antriebsstrang eines Fahrzeuges platziert sind. Der Antriebsstrang umfasst diejenigen Komponenten, die das Drehmoment vom Motor bis auf die Straße übertragen. Die Gelenke selbst sind oftmals als Verschiebegelenke in Form von Gegenbahngelenken ausgebildet und bestehen aus mehreren ineinandergreifenden Teilen. Ein Eindringen von Schmutzpartikeln in diese Gelenke würde zu Beschädigungen, eventuell sogar zur Zerstörung der Gelenke führen und muss demnach verhindert, zumindest jedoch verringert werden. Die Gehäusekappen erzielen diesen Effekt.

Aus dem Stand der Technik sind diverse Gehäusekappen bekannt, beispielsweise aus der DE 100 20 641 A1 oder aus der GB 2 259 349 A Um die Beweglichkeit der Welle nicht einzuschränken, ist es funktionsnotwendig, dass die Gehäusekappen an ihrem der Welle zugewandten Ende offen sind. Dadurch bedingt können Verschmutzungen und Fahrwasser in die Gehäusekappe gelangen. Je nach Beschaffenheit des Fahruntergrunds kann dies in erheblichen Mengen geschehen. Die Verunreinigungen gelangen von selbst nicht wieder aus der Gehäusekappe heraus und sind auch nur sehr schwer aus dieser zu entfernen. Oftmals ist für eine gründliche Reinigung eine komplette Demontage notwendig. Werden die Verunreinigungen jedoch nicht entfernt, kann dies zu Korrosion, insbesondere zu Spaltkorrosion der Gehäusekappe führen. Zudem besteht Beschädigungsgefahr der Gelenke, insbesondere des aus einem gummiartigen Material gefertigten Faltenbalgs.

Die der Erfindung zugrunde liegende Aufgabe ist es demnach, eine Gehäusekappe mit verringerter Affinität zu einer Ablagerung von Verschmutzungen anzugeben.

Die zuvor hergeleitete und aufgezeigte Aufgabe ist erfindungsgemäß dadurch gelöst, dass die Gehäusekappe im Faltenbalgabschnitt mindestens eine Aussparung aufweist. Durch die erfindungsgemäße Aussparung wird erreicht, dass in die Gehäusekappe eindringende Verschmutzungen und Flüssigkeiten durch die Aussparung ausgeleitet werden, also durch die Gehäusekappe durchgeleitet werden. Ein Ablagern der Verschmutzungen wird dadurch reduziert, so dass die Anfälligkeit für Korrosion der Gehäusekappe deutlich verringert wird. Lagern sich an einigen Stellen im Inneren der Gehäusekappe dennoch Verschmutzungen an, kann eine Flüssigkeit durch die Aussparung durchgeleitet werden, wodurch ein Spüleffekt erreicht wird. Die erfindungsgemäße Gehäusekappe weist eine deutlich höhere Lebensdauer als aus dem Stand der Technik bekannte Gehäusekappen auf.

Der erzielte Effekt tritt sowohl im statischen als auch im rotierenden Betriebszustand der Gehäusekappe auf. Im rotierenden Betriebszustand ist der Selbstreinigungseffekt selbstredend größer als im statischen Zustand, da die angesammelten Flüssigkeiten und/oder Verschmutzungen aufgrund der auf sie wirkenden Fliehkräfte durch die Aussparungen nach außen geschleudert werden.

Erfindungsgemäß kann die Aussparung einen beliebigen Durchmesser aufweisen. Um den oben genannten Effekt zu erzielen, versteht sich jedoch von selbst, dass die Aussparung zumindest größer sein muss als die Größe der Schmutzpartikel, die durch sie ausgeleitet werden. Ein weiterer Vorteil in der Ausgestaltung einer Gehäusekappe mit einer Aussparung ist in der resultierenden Gewichtsreduktion der Gehäusekappe begründet. Je größer die Aussparung, desto leichter die Gehäusekappe. Natürlich muss darauf geachtet werden, dass die Gehäusekappe aufgrund der Aussparung nicht instabil wird. Bei der Frage der Größe der Aussparung ist also abzuwägen zwischen notwendiger Größe, um ein Ausleiten der Schmutzpartikel zu garantieren, einer vorteilhaften Gewichtsreduktion und der Stabilität der Gehäusekappe.

Eine bevorzugte Ausgestaltung der erfindungsgemäßen Gehäusekappe ist dadurch gekennzeichnet, dass die Gehäusekappe im Faltenbalgabschnitt zylinderförmig ausgeformt ist.

Besonders bevorzugt weist die zylinderförmig ausgeformte Gehäusekappe einen derartigen Querschnitt auf, dass sie rotationssymmetrisch ist. Vor allem im rotierenden Betriebszustand erweist sich eine rotationssymmetrische Gehäusekappe als besonders vorteilhaft. Hierdurch werden Unwuchten vermieden. Insbesondere bietet sich eine zylinderförmige Ausformung mit kreisrundem Querschnitt an. Die zylinderförmige Ausformung - insbesondere mit kreisrundem Querschnitt - erweist sich zusätzlich als besonders vorteilhaft, da der Zylinder selbst keine Ecken und Kanten aufweist, in denen sich die Verschmutzungen anlagern können, insbesondere keine Ecken und Kanten, in die die Verschmutzungen durch die Fliehkräfte gepresst werden können.

Eine weitere Ausgestaltung der erfindungsgemäßen Gehäusekappe ist dadurch gekennzeichnet, dass die Aussparung mindestens einen kreisförmigen Umrandungsabschnitt aufweist. Insbesondere kann vorgesehen sein, dass die Umrandung der Aussparung vollständig kreisförmig ist.

In einer weiteren Ausgestaltung der erfindungsgemäßen Gehäusekappe ist vorgesehen, dass die Aussparung mindestens einen gradlinigen Umrandungsabschnitt aufweist.

Selbstverständlich kann die Aussparung auch sowohl kreisförmige, als auch gradlinige Umrandungsabschnitte aufweisen. So kann beispielsweise vorgesehen sein, dass die Aussparung eine im wesentlichen rechteckige Umrandung aufweist, bei der die Ecken jedoch abgerundet sind.

Insbesondere empfiehlt es sich, dass die Aussparung keine spitzen Kanten aufweist. Da die Gehäusekappe um den Faltenbalg angeordnet ist, sollte vermieden werden, dass der Faltenbalg mit spitzen Kanten in Berührung kommt, was zu einer Beschädigung des Faltenbalgs führen könnte.

Die Aussparungen werden aus der Gehäusekappe ausgestanzt. Einfache geometrische Umrandungsformen sind demnach besonders bevorzugt. Die Herstellung der Aussparungen ist jedoch nicht auf ein Ausstanzen beschränkt, es können auch weitere bekannte Verfahren angewendet werden, die dazu geeignet sind, Aussparungen herzustellen.

Eine besonders bevorzugte Ausgestaltung der erfindungsgemäßen Gehäusekappe ist dadurch gekennzeichnet, dass die Gehäusekappe eine trichterförmige - insbesondere kegelförmige oder pyramidenförmige - Prägung im Bereich der Aussparung aufweist, wobei die Aussparung an einer Stirnseite an einem verjüngten Teil der trichterförmigen Prägung angeordnet ist.

Durch diese bevorzugte Ausgestaltung wird der Effekt des Ausschleuderns der Verschmutzungen und Flüssigkeiten weiter verstärkt, da die erfindungsgemäße Prägung einen Trichtereffekt erzielt. Durch die trichterförmigen Prägungen werden die Verschmutzungen und/oder Flüssigkeiten gezielt zu den Aussparungen hingeleitet, so dass ein Zufluss aus axialer und radialer Richtung zu den Aussparungen ermöglicht wird.

Erfindungsgemäß gibt es eine Vielzahl von Ausgestaltungen der trichterförmigen Prägung. Sowohl die kegelförmige als auch die pyramidenförmige Prägung kann eine verschiedene Ausgestaltung aufweisen. Ist die trichterförmige Prägung kegelförmig ausgebildet, befindet sich die Aussparung an der Spitze des Kegels. Der Kegel selbst kann als gerader oder schiefer Kegel beliebiger Höhe realisiert sein. Die Grundfläche des Kegels kann kreisförmig mit einem beliebigen Radius sein. Die Grundfläche kann ebenfalls elliptisch mit beliebiger Länge der Halbachsen ausgebildet sein.

Ist die trichterförmige Prägung pyramidenförmig ausgebildet, so ist eine Ausgestaltung der Gehäusekappe dadurch gekennzeichnet, dass die Seitenflächen der pyramidenförmigen Prägung beliebiger Anzahl sind. Die Pyramide kann eine regelmäßige oder eine unregelmäßige Pyramide beliebiger Höhe sein, wobei die Aussparung an der Spitze der Pyramide ausgebildet ist. Ebenfalls kann die Pyramide als gerade Pyramide ausgestaltet sein. Vorgesehen kann ebenfalls sein, die trichterförmige Prägung als schiefe Pyramide zu realisieren. Die Grundfläche richtet sich nach der Anzahl und Ausgestaltungen der Seitenflächen der Pyramide, kann jedoch eine beliebige Ausdehnung aufweisen.

Grundsätzlich sollte die Gehäusekappe eine derartige Ausgestaltung haben, die jegliches Risiko des Verschleißes und der Beschädigung des Faltenbalgs verhindert oder zumindest minimiert. Das kann insbesondere dadurch erreicht werden, dass der Abstand zwischen Gehäusekappe und Faltenbalg maximiert wird. Eine bevorzugte Ausgestaltung der erfindungsgemäßen Gehäusekappe ist dadurch gekennzeichnet, dass die Gehäusekappe im Faltenbalgabschnitt eine bauchige Form aufweist und die Aussparung auf der Höhe des größten Umfangs des Faltenbalgabschnitts vorgesehen ist. Die bauchige Form weist hierbei radial nach außen. Insbesondere hat eine derartige Ausgestaltung den Vorteil, dass durch die zusätzliche bauchige Form der Gehäusekappe ein Zufluss zu den Aussparungen erleichtert wird. Die bauchige Form kann erfindungsgemäß ohne die oben erwähnten trichterförmigen Prägungen vorgesehen sein, es bietet sich aber auch an, die bauchige Form zusätzlich zu den trichterförmigen Prägungen vorzusehen. Dann ist es besonders vorteilhaft, wenn die maximale Ausprägung einer trichterförmigen Prägung auf derselben Umfangslinie liegt, wie die maximale Ausprägung der bauchigen Form.

Es kann auch vorgesehen sein, dass die bauchige Form radial nach innen weist. Bei einer derartigen Ausgestaltung ist darauf zu achten, dass der Abstand zwischen der Gehäusekappe und dem Faltenbalg nicht zu gering wird, um eine Beschädigung des Faltenbalgs zu vermeiden. Die Aussparungen sind auch bei einer nach innen gerichteten bauchigen Form auf der Höhe des größten Umfangs des Faltenbalgabschnitts vorgesehen.

Wenn es heißt, dass die Gehäusekappe mindestens eine Aussparung aufweist, dann kann die Gehäusekappe auch mehrere Aussparungen aufweisen. Eine bevorzugte Ausgestaltung der erfindungsgemäßen Gehäusekappe ist dadurch gekennzeichnet, dass mehrere Aussparungen vorgesehen sind, wobei die Aussparungen und/oder die trichterförmigen Prägungen jeweils im Wesentlichen gleich ausgebildet sind. Eine Ausführungsform ist demnach dadurch gekennzeichnet, dass sämtliche Aussparungen im Wesentlichen die gleiche Umrandung aufweisen. Eine weitere Ausführungsform ist dadurch gekennzeichnet, dass die trichterförmigen Prägungen im Bereich der Aussparungen im Wesentlichen gleich ausgebildet sind.

Eine weitere Ausführungsform der erfindungsgemäßen Gehäusekappe ist dadurch gekennzeichnet, dass mehrere Aussparungen vorgesehen sind, wobei mindestens zwei der Aussparungen eine voneinander abweichende Umrandung aufweisen und/oder mindestens zwei der trichterförmigen Prägungen voneinander abweichend ausgebildet sind. Eine derartige Gehäusekappe kann demnach Aussparungen mit verschiedenen Umrandungen und verschiedenen trichterförmigen Prägungen im Bereich der Aussparungen aufweisen.

Weist die Gehäusekappe mindestens zwei Aussparungen auf, dann ist eine besondere Ausführungsform der erfindungsgemäßen Gehäusekappe dadurch gekennzeichnet, dass die Aussparungen regelmäßige Abstände zueinander aufweisen. Sind also zwei Aussparungen vorgesehen, empfiehlt es sich, die Aussparungen einander gegenüberliegend anzuordnen.

Durch eine regelmäßige Anordnung der Aussparungen wird eine Unwucht bei Rotation der Gehäusekappe vermieden, also vermieden, dass die Hauptträgheitsachse nicht mit der Rotationsachse zusammenfällt. Eine Unwucht wird deshalb vermieden, weil auftretende Flüssigkeiten oder allgemein Medien gleichmäßig aus der Gehäusekappe ausdringen können. Eine Unwucht würde zum einen zu einem erhöhten Verschleiß führen und zum anderen möglicherweise Vibrationen verursachen.

Sind mehrere Aussparungen in der Gehäusekappe vorgesehen, dann können die Aussparungen auf einer Umfangslinie auf einer Höhe einer Längsachse der Gehäusekappe vorgesehen sein. Durch eine derartige Ausgestaltung wird insbesondere ein gleichmäßiges Ausschleudern von Verschmutzungen und Flüssigkeiten begünstigt. Die erfindungsgemäße Gehäusekappe ist jedoch nicht auf eine derartige Ausführungsform beschränkt. Als vorteilhaft kann sich auch erweisen, die Aussparungen nicht auf einer Umfangslinie auf einer Höhe einer Längsachse der Gehäusekappe, sondern versetzt anzuordnen. Auch bei einer versetzten Anordnung sollten die Aussparungen in regelmäßigen Abständen voneinander vorgesehen sein.

Wie einleitend erwähnt, finden Gehäusekappen der in Rede stehenden Art insbesondere in der Automobilindustrie Anwendung und dienen zum Schutz von Gelenken, die insbesondere im Antriebsstrang eines Fahrzeuges platziert sind. Die Erfindung betrifft demnach auch eine Anordnung aus einem Gelenk und einer Welle, mit einer Gehäusekappe und einem Faltenbalg, wobei die Gehäusekappe einen Faltenbalgabschnitt und einen Gelenkabschnitt aufweist und wobei die Gehäusekappe eine Außennabe des Gelenks und den Faltenbalg umfasst, wobei der Faltenbalg zwischen dem Gelenk und der mit dem Gelenk verbundenen Welle angeordnet ist. Die der Erfindung zugrunde liegende Aufgabe ist bei der in Rede stehenden Anordnung dadurch gelöst, dass die Gehäusekappe nach einer der ausgeführten Ausgestaltungen realisiert ist.

Im Einzelnen gibt es nun verschiedene Möglichkeiten, die erfindungsgemäße Gehäusekappe auszugestalten und weiterzubilden. Dazu wird verwiesen sowohl auf die dem Patentanspruch 1 nachgeordneten Patentansprüche als auch auf die Beschreibung bevorzugter Ausführungsbeispiele in Verbindung mit der Zeichnung. In der Zeichnung zeigen
- Fig. 1: eine erste Ausgestaltung der erfindungsgemäßen Gehäusekappe,
- Fig. 2: eine zweite Ausgestaltung der erfindungsgemäßen Gehäusekappe,
- Fig. 3: eine dritte Ausgestaltung der erfindungsgemäßen Gehäusekappe,
- Fig. 4: eine vierte Ausgestaltung der erfindungsgemäßen Gehäusekappe,
- Fig. 5: eine Anordnung aus einem Gelenk und einer Welle mit einer erfindungsgemäßen Gehäusekappe.

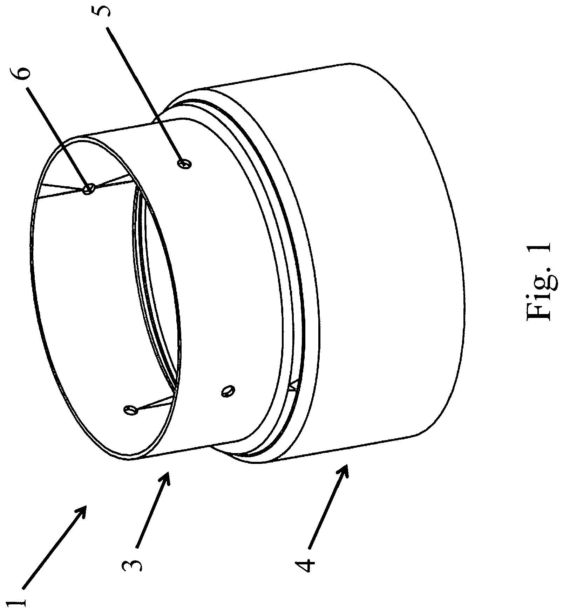

Fig. 1 zeigt ein erstes Ausführungsbeispiel der erfindungsgemäßen Gehäusekappe 1. Die Gehäusekappe 1 weist einen Faltenbalgabschnitt 3 und einen Gelenkabschnitt 4 auf. Sowohl der Faltenbalgabschnitt 3 als auch der Gelenkabschnitt 4 sind zylinderförmig ausgeformt, wobei der Außendurchmesser des Gelenkabschnitts 4 größer ist als der Außendurchmesser des Faltenbalgabschnitts 3. In dem Faltenbalgabschnitt 3 befinden sich vier Aussparungen 5. Die Aussparungen 5 sind alle identisch ausgestaltet, weisen nämlich eine kreisförmige Umrandung 6 auf. Die Aussparungen weisen eine derartige Größe auf, dass Verunreinigungen, beispielsweise in Form von Schmutzpartikeln ungehindert hindurchpassen. Die vier Aussparungen 5 sind jeweils um 90° voneinander beabstandet angeordnet, weisen also einen regelmäßigen Abstand zueinander auf. Die Aussparungen 5 sind auf einer Umfangslinie mittig der Längserstreckung des Faltenbalgabschnitts 3 angeordnet.

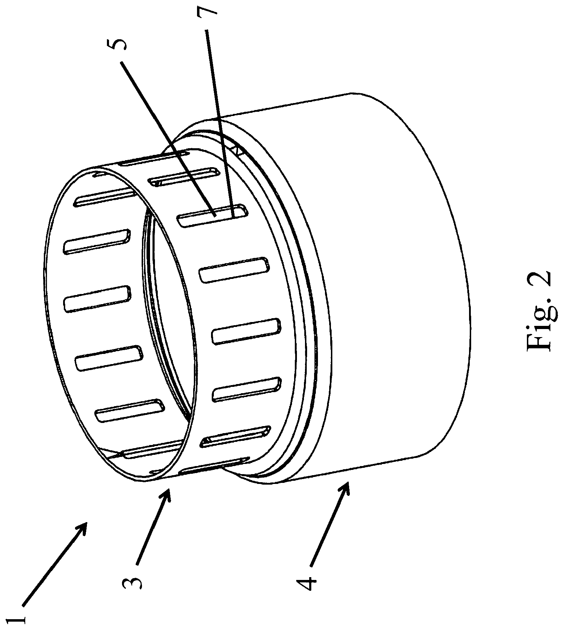

Das in Fig. 2 dargestellte Ausführungsbeispiel der erfindungsgemäßen Gehäusekappe 1 unterscheidet sich von dem in Fig. 1 dargestellten Ausführungsbeispiel durch die Anzahl und Ausgestaltung der Aussparungen 5 in dem Faltenbalgabschnitt 3. Die Gehäusekappe 1 weist sechzehn Aussparungen 5 auf, die in einem regelmäßigen Abstand zueinander angeordnet sind. Die Aussparungen 5 selbst sind identisch ausgebildet und weisen eine im Wesentlichen rechteckige Form auf, wobei die Ecken der Aussparungen 5 abgerundet sind. Des Weiteren sind die Aussparungen 5 auf einer Umfangslinie mittig der Längserstreckung des Faltenbalgabschnitts 3 angeordnet. Weist eine Gehäusekappe eine Vielzahl von Aussparungen auf, ergibt sich der Vorteil, dass sich das Gewicht der Gehäusekappe um einen nicht zu vernachlässigenden Faktor reduziert.

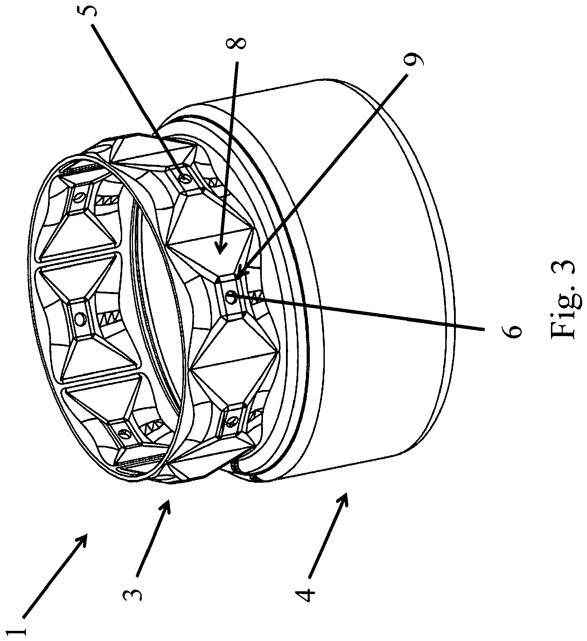

Um die sich ansammelnden Verschmutzungen oder Flüssigkeit gezielt zu den Aussparungen 5 zu leiten, weist die in Fig. 3 dargestellte Gehäusekappe 1 im Bereich des Faltenbalgabschnitts 3 trichterförmige Prägungen 8 auf. Die Trichterform ist realisiert durch eine pyramidenförmige Ausgestaltung, wobei die Pyramide eine im Wesentlichen rechteckige Grundfläche und im Wesentlichen vier Seitenflächen aufweist. Die in Längsrichtung der Gehäusekappe 1 nacheinander folgenden Grundflächen weisen hierbei jeweils eine weitere Prägung auf und sind aus vier Teilflächen zusammengesetzt. Die Steilkanten der Pyramide sind jeweils abgeflacht. An der Stirnseite 9 der trichterförmigen Prägung 8, nämlich an dem verjüngten Teil der trichterförmigen Prägung 8 befinden sich die Aussparungen 5, die einen kreisrunden Umfang 6 haben.

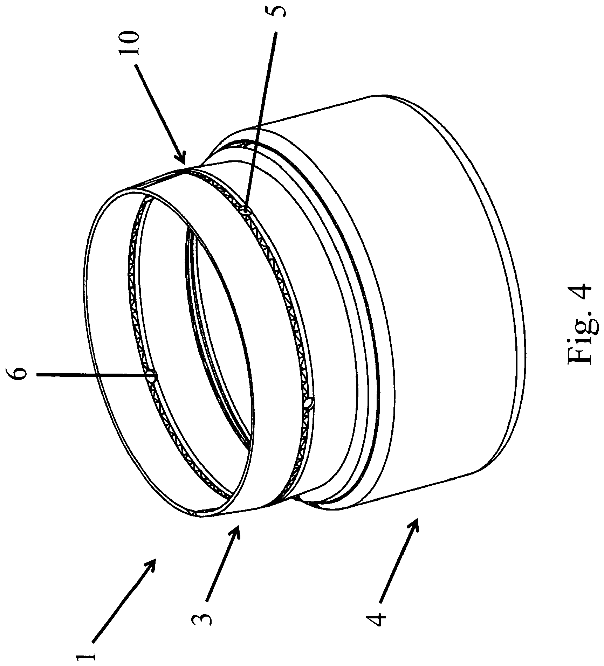

Fig. 4 zeigt eine Ausführungsform der erfindungsgemäßen Gehäusekappe 1, bei der der Faltenbalgabschnitt 3 eine bauchige Form 10 aufweist. Der größte Umfang des Faltenbalgabschnitts 3 ist mittig der Längserstreckung des Faltenbalgabschnitts. Auf der Höhe des größten Umfangs befinden sich fünf Aussparungen 5, die, wie die in Fig. 1 dargestellten Aussparungen 5, eine kreisrunde Umrandung 6 aufweisen. Die Aussparungen 5 sind in regelmäßigen Abständen zueinander angeordnet. Durch die bauchige Form des Faltenbalgabschnitts 3 wird ein Zufluss der Verunreinigungen zu den Aussparungen 5 gefördert, so dass eine Selbstreinigung des Gelenks bzw. der Gehäusekappe weiter begünstigt wird.

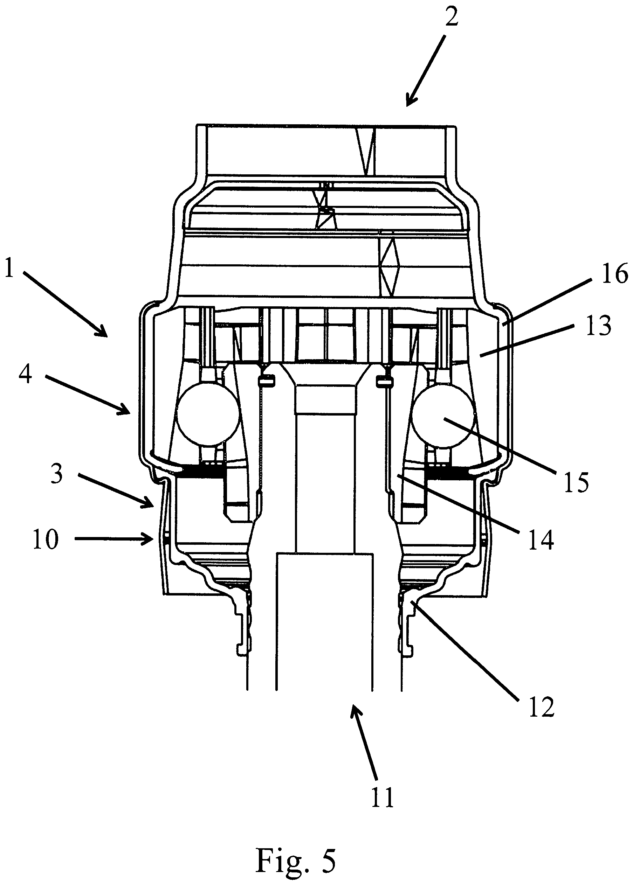

Fig. 5 zeigt eine Anordnung aus einem Gelenk 2 und einer Welle 11 mit einer Gehäusekappe 1 und einem Faltenbalg 12. Das Gelenk 2 weist eine Außennabe 13 und eine Innennabe 14 auf. Zwischen der Außennabe 13 und der Innennabe 14 ist eine Kugel 15 gelagert. Das Gelenk 2 ist von einem Gehäuse 16 umgeben, das die Außennabe 13 umschließt. An das Gehäuse 16 schließt sich der Faltenbalg 12 an. Die Gehäusekappe 1 weist einen Faltenbalgabschnitt 3 und einen Gelenkabschnitt 4 auf, wobei der Gelenkabschnitt 4 die Außennabe 13 und einen Teil des das Gelenk 2 umschließende Gehäuse 16, nämlich den Teil des Gehäuses 16 im Bereich der Außennabe 13 umfasst. Der Faltenbalgabschnitt 3 der Gehäusekappe 1 umfasst einen Teil des Faltenbalgs 12. Die Gehäusekappe 1 ist an ihrem der Welle 11 zugewandten Ende offen ausgestaltet. Hierdurch gelangen Verunreinigungen und Flüssigkeiten in die Gehäusekappe 1. Die in Fig. 5 dargestellte Gehäusekappe weist eine bauchige Form 10 auf, wodurch ein Ausleiten sich ansammelnder Verunreinigungen und Flüssigkeiten durch in Fig. 5 nicht sichtbare Aussparungen begünstigt wird.

## Patentansprüche

1. Gehäusekappe (1) für ein Gelenk, mit einem Faltenbalgabschnitt (3) und mit einem Gelenkabschnitt (4),
**dadurch gekennzeichnet,**
**dass** die Gehäusekappe (1) im Faltenbalgabschnitt (3) mindestens eine Aussparung (5) für die Ausleitung von in die Gehäusekappe (1) eindringenden Verschmutzungen und Flüssigkeiten aufweist.

2. Gehäusekappe (1) nach Anspruch 1, **dadurch gekennzeichnet, dass** die Gehäusekappe (1) im Faltenbalgabschnitt (3) zylinderförmig ausgeformt ist.

3. Gehäusekappe (1) nach Anspruch 1 oder 2, **dadurch gekennzeichnet, dass** die Aussparung (5) mindestens einen kreisförmigen Umrandungsabschnitt (6) aufweist.

4. Gehäusekappe (1) nach einem der Ansprüche 1 bis 3, **dadurch gekennzeichnet, dass** die Aussparung (5) mindestens einen gradlinigen Umrandungsabschnitt aufweist.

5. Gehäusekappe (1) nach einem der Ansprüche 1 bis 4, **dadurch gekennzeichnet, dass** die Gehäusekappe (1) eine trichterförmige - insbesondere kegelförmige oder pyramidenförmige - Prägung (8) im Bereich der Aussparung (5) aufweist, wobei die Aussparung (5) an einer Stirnseite an einem verjüngten Teil der trichterförmigen Prägung (8) angeordnet ist.

6. Gehäusekappe (1) nach einem der Ansprüche 1 bis 5, **dadurch gekennzeichnet, dass** die Gehäusekappe (1) im Faltenbalgabschnitt (3) eine bauchige Form aufweist und die Aussparung (5) auf der Höhe des größten Umfangs des Faltenbalgabschnitts (3) vorgesehen ist.

7. Gehäusekappe (1) nach einem der Ansprüche 1 bis 6, **dadurch gekennzeichnet, dass** mehrere Aussparungen (5) vorgesehen sind, wobei die Aussparungen (5) und/oder die trichterförmigen Prägungen (8) jeweils im Wesentlichen gleich ausgebildet sind.

8. Gehäusekappe (1) nach einem der Ansprüche 1 bis 7, **dadurch gekennzeichnet, dass** mehrere Aussparungen (5) vorgesehen sind, wobei mindestens zwei der Aussparungen (5) eine voneinander abweichende Umrandung aufweisen und/oder mindestens zwei der trichterförmigen Prägungen (8) voneinander abweichend ausgebildet sind.

9. Gehäusekappe (1) nach einem der Ansprüche 7 oder 8, **dadurch gekennzeichnet, dass** die Aussparungen (5) regelmäßige Abstände zueinander aufweisen.

10. Anordnung aus einem Gelenk (2) und einer Welle (11), mit einer Gehäusekappe (1) und einem Faltenbalg (12), wobei die Gehäusekappe (1) einen Faltenbalgabschnitt (3) und einen Gelenkabschnitt (4) aufweist und wobei die Gehäusekappe (1) eine Außennabe (13) des Gelenks (2) und den Faltenbalg (12) umfasst, wobei der Faltenbalg (12) zwischen dem Gelenk (2) und der mit dem Gelenk (2) verbundenen Welle (11) angeordnet ist,
**dadurch gekennzeichnet,**
**dass** die Gehäusekappe (1) nach einem der Ansprüche 1 bis 9 realisiert ist.

## Claims

1. Housing cap (1) for a joint, with a folding bellows section (3) and a joint section (4),
**characterized by the fact that**
the housing cap (1) has at least one recess (5) in the folding bellows section (3) for the removal of dirt and liquids that penetrate into the housing cap (1).

2. Housing cap (1), according to Claim 1, **characterized by** the fact that the housing cap (1) is cylindrically shaped in the folding bellows section (3).

3. Housing cap (1), according to Claim 1 or 2, **characterized by** the fact that the recess (5) has at least one annular border section (6).

4. Housing cap (1), according to one of Claims 1 to 3, **characterized by** the fact that the recess (5) has at least one straight-line border section.

5. Housing cap (1), according to one of Claims 1 to 4, **characterized by** the fact that the housing cap (1) has a funnel-shaped - in particular conical or pyramid-shaped - marking (8) in the region of the recess (5), the recess (5) being arranged on an end face on a tapered part of the funnel-shaped marking (8).

6. Housing cap (1), according to one of Claims 1 to 5, **characterized by** the fact that the housing cap (1) has a bulbous shape in the folding bellows section (3) and the recess (5) is located at the level of the largest circumference of the folding bellows section (3).

7. Housing cap (1), according to one of Claims 1 to 6, **characterized by** the fact that several recesses (5) are provided, whereby the recesses (5) and/or the funnel-shaped markings (8) are each of substantially identical design.

8. Housing cap (1), according to one of the Claims 1 to 7, **characterized by** the fact that several recesses (5) are provided, whereby at least two of the recesses (5) each have a border that differs from the others and/or at least two of the funnel-shaped markings (8) are designed differently from one another.

9. Housing cap (1), according to one of Claims 7 or 8, **characterized by** the fact that the recesses (5) are at regular distances from one another.

10. An arrangement comprising a joint (2) and a shaft (11), comprising a housing cap (1) and a folding bellows (12), whereby the housing cap (1) has a folding bellows section (3) and a joint section (4) and whereby the housing cap (1) comprises an outer hub (13) of the joint (2) and the folding bellows (12), whereby the folding bellows (12) is arranged between the joint (2) and the shaft (11) connected to the joint (2),
**characterized by the fact that**
the housing cap (1) is realized according to one of Claims 1 to 9.

## Revendications

1. Capot de boîtier (1) pour une articulation, avec une section à soufflet (3) et une section articulée (4),
**caractérisé en ce que,**
le capot de boîtier (1) dans la section à soufflet (3) présente au moins un évidement (5) pour la déviation des salissures et des fluides pénétrant dans le capot de boîtier (1).

2. Capot de boîtier (1) selon la revendication 1, **caractérisé en ce que** le capot de boîtier (1) dans la section à soufflet (3) est doté d'une forme cylindrique.

3. Capot de boîtier (1) selon la revendication 1 ou 2, **caractérisé en ce que** l'évidement (5) présente au moins une section périphérique circulaire (6).

4. Capot de boîtier (1) selon l'une des revendications 1 à 3, **caractérisé en ce que** l'évidement (5) présente au moins une section périphérique rectiligne.

5. Capot de boîtier (1) selon l'une des revendications 1 à 4, **caractérisé en ce que** le capot de boîtier (1) présente une marque (8) en forme d'entonnoir (et plus particulièrement en forme de cône ou de pyramide) dans la zone de l'évidement (5), lequel évidement (5) est disposé au niveau d'une face frontale contre une partie rétrécie de la marque en forme d'entonnoir (8).

6. Capot de boîtier (1) selon l'une des revendications 1 à 5, **caractérisé en ce que** le capot de boîtier (1) dans la section à soufflet (3) présente une forme bombée, et **en ce que** l'évidement (5) est prévu à hauteur de la plus grande circonférence de la section à soufflet (3).

7. Capot de boîtier (1) selon l'une des revendications 1 à 6, **caractérisé en ce que** plusieurs évidements (5) sont prévus, lesquels évidements (5) et/ou les marques en forme d'entonnoir (8) sont formés, pour l'essentiel, de la même manière.

8. Capot de boîtier (1) selon l'une des revendications 1 à 7, **caractérisé en ce que** plusieurs évidements (5) sont prévus, deux des évidements (5) au moins présentant un pourtour distinct de l'autre et/ou au moins deux des marques en forme d'entonnoir (8) étant formées différemment l'une de l'autre.

9. Capot de boîtier (1) selon l'une des revendications 7 ou 8, **caractérisé en ce que** les évidements (5) présentent des distances régulières les uns par rapport aux autres.

10. Disposition à partir d'une articulation (2) et d'un arbre (11), avec un capot de boîtier (1) et un soufflet (12), le capot de boîtier (1) présentant une section à soufflet (3) et une section articulée (4) et le capot de boîtier comportant un moyeu extérieur (13) de l'articulation (2) et du soufflet (12), le soufflet (12) étant positionné entre l'articulation (2) et l'arbre (11) relié à l'articulation (2),
**caractérisé en ce que,**
le capot de boîtier (1) est réalisé selon l'une des revendications 1 à 9.
